# EUROPÄISCHE PATENTANMELDUNG

(11) **EP 1 023 953 A2**
(43) Veröffentlichungstag der Anmeldung: **02.08.2000**
(21) Anmeldenummer: 99250404.3
(22) Anmeldetag: 17.11.1999
(51) Int. Cl.: B21D 39/04, F16L 13/14

(54) **Rohrpressverbindung**

(30) Priorität: 26.01.1999 DE 19903975
(71) Anmelder: Mapress GmbH & Co. KG, 40764 Langenfeld (DE)
(72) Erfinder: Sedlak, Bernd, 45478 Mühlheim (DE)
(74) Vertreter: Meissner, Peter E., Dipl.-Ing.

(57) **Zusammenfassung**

Die Erfindung betrifft eine Rohrpreßverbindung, bestehend aus einem Preßfittingelement, das mindestens einen im Querschnitt wulstartig ausgebildeten, ein Dichtmittel aufnehmenden Bereich und einen daran anschließenden, der Einschubseite abgewandten zylindrisch ausgebildeten Bereich aufweist und einem dünnwandigen Leitungsrohr, dessen glattendiger Endbereich nach dem Einschub in das Preßfittingelement am inneren Anschlag des Preßfittingelementes zur Anlage kommt und mittels eines das Preßfittingelement umfassenden, mindestens zwei Preßbacken aufweisenden Preßwerkzeuges nach dem Ansetzen und Schließen eine unlösbare, dichte Rohrpreßverbindung gebildet wird, wobei unter Verzicht der Anordnung eines separaten Dichtmittels das offene Ende des Ringwulstes nach innen eingerollt ist.

## Beschreibung

Die Erfindung betrifft eine Rohrpreßverbindung, bestehend aus einem Preßfittingelement und einem darin eingeschobenen Leitungsrohr gemäß dem Oberbegriff des Patentanspruches 1.

Das Preßfitting-System für die Hausinstallation aus C-Stahl oder hochlegiertem Stahl ist bekannt (siehe Prospekt der Mannesmann Pressfitting GmbH, Mannesmann Pressfitting-System / Sanitär, Ausgabe 8/94 und Mannesmann Pressfitting-System / Heizung, Ausgabe 11/94 oder DE-OS 27 25 280). Dieses System ist gekennzeichnet durch ein plastisch verformbares Preßfittingelement aus Metall, das je nach Ausbildung als Bogen oder T-Stück oder Muffe oder Übergangsstück mindestens einen im Querschnitt wulstartig ausgebildeten, einen Dichtring aufnehmenden Bereich aufweist und daran sich ein in Längsrichtung erstreckender zylindrisch ausgebildeter Bereich anschließt. Am Ende der Erstreckung dieses zylindrischen Bereiches ist eine radial nach innen sich erstreckende sickenförmige Vertiefung angepreßt, die als Anschlag für das einschiebbare glattendige dünnwandige Leitungsrohr aus Metall dient. Das dritte bereits schon genannte Element des Preßfitting-Systems ist der Dichtring. Dieser wird aus einem gummielastischen Werkstoff, wie z. B. Butylkautschuk meist in Form eines Runddichtringes hergestellt. Mittels eines mindestens zwei Preßbacken aufweisenden Preßwerkzeuges wird das wulstartige Ende des Preßfittingelementes plastisch und der darin eingeschlossene Dichtring elastisch verformt. Zusätzlich wird mit dem gleichen Preßvorgang im zylindrischen Bereich des Preßfittingelementes in unmittelbarer Nähe des wulstartigen Endes eine sickenförmige Vertiefung plastisch angepreßt, die auch das darunter liegende eingeschobene Leitungsrohr miterfaßt. Der nur elastisch verformte Dichtring übernimmt bei diesem Verbindungssystem die Dichtfunktion, während die angepreßte sickenförmige Vertiefung die durch den Innendruck entstehenden Längskräfte sowie einen Teil der Momente aufnimmt. Diese Rohrpreßverbindung mit einer Kombination aus einer plastischen Verformung der metallischen Elemente wie Preßfitting und Leitungsrohr und einer rein elastischen Verformung des eingelegten Dichtringes hat sich seit mehr als zwanzig Jahren in der Sanitär- und Heizungstechnik bewährt, da die Verpreßtechnik gegenüber Löten und Schweißen sowie Gewindeverbindungen hinsichtlich der Montagezeit und Vermeidung von Brandgefahr von Vorteil ist.

Nachteilig bei dieser Anordnung aber ist, daß bedingt durch das für den Dichtring verwendete Material der Einsatzbereich des Systems hinsichtlich der Temperatur und bezüglich der zu transportierenden Medien begrenzt ist.

In der Vergangenheit hat es schon Versuche gegeben, den Einsatzbereich des Preßfitting-Systems zu erweitern. Beispielsweise ist in der DE 195 44 161 A1 offenbart, die Querschnittsgeometrie und / oder die Struktur des verwendeten Dichtringes so zu verändern, daß auch ein Einsatz bis zu einer Temperatur von 300 °C möglich ist. Dabei wird statt eines Dichtringes aus Butyl-Kautschuk einer auf Basis von Fluorpolymeren verwendet. Die praktischen Versuche blieben aber unbefriedigend, da die grundsätzliche Problematik des stark unterschiedlichen Ausdehnungskoeffizienten zwischen Kunststoff für den Dichtring und Metall für das Preßfittingelement zwar etwas verringert, aber nicht beseitigt werden konnte. Die Akzeptanz zu transportierender aggressiver Medien ist dabei nicht untersucht worden, so daß auch dieses Problemfeld weiterhin nicht gelöst ist.

Aufgabe der Erfindung ist es, eine Rohrpreßverbindung anzugeben, die unter Beibehaltung der bewährten Verpreßtechnik universell einsetzbar ist und mit der insbesondere höhere Temperaturen und der Transport aggressiver Medien beherrschbar sind.

Diese Aufgabe wird ausgehend vom Oberbegriff in Verbindung mit dem kennzeichnenden Merkmal des Patentanspruches 1 gelöst. In den Unteransprüchen sind vorteilhafte Weiterbildungen festgelegt.

Nach der Lehre der Erfindung ist unter Verzicht der Anordnung eines separaten Dichtmittels das offene Ende des Ringwulstes nach innen eingerollt. Damit beim Einschieben des Leitungsrohres dieser Bereich federnd auf das Leitungsrohr einwirkt, ist der größte im Scheitelbereich liegende Innendurchmesser des eingerollten Ringwulstes höchstens gleich oder kleiner als der kleinste Außendurchmesser des eingeschobenen Leitungsrohres.

Der Grad der Einrollung soll mindestens 30 ° betragen, wobei der Winkel von der im Scheitelbereich liegenden Vertikalen aus gemessen wird. Vorzugsweise beträgt der Einrollbereich 45 °.

Der Vorteil der vorgeschlagenen Anordnung ist darin zu sehen, daß der Einsatzbereich des Systems hinsichtlich Temperatur und Transport kritischer Medien durch den verwendeten Werkstoff für das Leitungsrohr und das Preßfittingelement allein bestimmt wird, da auf die Anordnung eines separaten Dichtmittels aus einem gummielastischen Werkstoff verzichtet wird. Erfindungswesentlich dabei ist, daß die als bisher unabdingbar geltende Kombination für Rohrpreßverbindungen von metallischen Elementen (Preßfittingelement und Leitungsrohr) mit einem gummielastischen nicht metallischen Element (Dichtring) verlassen wird und das eingerollte Ende des Ringwulstes selbst die Dichtung bildet und somit nur noch metallische Werkstoffe für das System Verwendung finden.

In der Zeichnung wird anhand eines Ausführungsbeispieles die erfindungsgemäß ausgebildete Rohrpreßverbindung näher erläutert. Es zeigen:

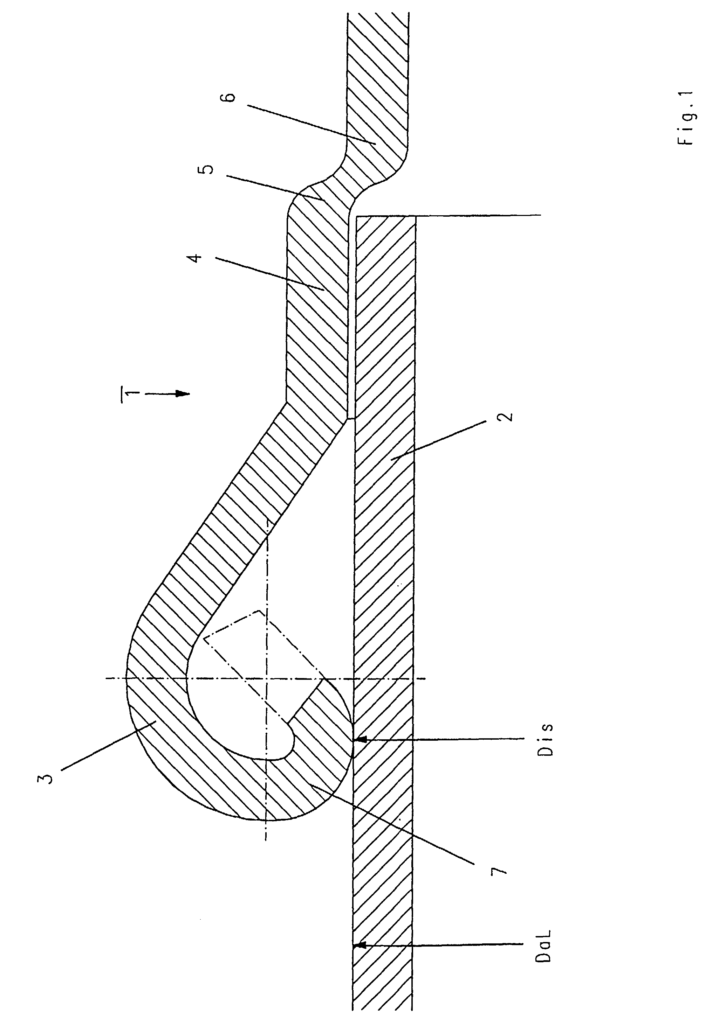

- Figur 1: einen halbseitigen Längsschnitt einer erfindungsgemäß ausgebildeten Rohrpreßverbindung vor dem Verpressen

In Figur 1 ist in einem Längsschnitt eine erste Ausführungsform der erfindungsgemäß ausgebildeten Rohrpreßverbindung dargestellt. Diese Rohrpreßverbindung besteht aus einem Preßfittingelement 1 und einem darin eingeschobenen Leitungsrohr 2. Das Preßfittingelement 1 weist in bekannter Weise einen nach außen sich erstreckenden wulstförmig ausgebildeten Bereich 3 auf, einen daran sich anschließenden zylindrisch ausgebildeten Abschnitt 4, der in einen Absatz 5 übergeht in einen einen geringeren Durchmesser aufweisenden, ebenfalls zylindrisch ausgebildeten Abschnitt 6. Das hier dargestellte Preßfittingelement 1 kann Bestandteil einer Muffe, eines Bogens, eines T-Stückes, eines Reduzierstückes oder dergleichen sein. Im Unterschied zum bekannten Stand der Technik ist im wulstförmig ausgebildeten Bereich 3 kein separates Dichtmittel, vorzugsweise aus gummielastischem Material wie z. B. Butyl-Kautschuk angeordnet. Statt dessen weist der Ringwulst 3 einen nach innen gerollten Abschnitt 7 auf. Dieser Abschnitt 7 bildet nach dem Verpressen die Dichtebene der Rohrpreßverbindung. Die Erstreckung nach innen beträgt in Winkelgraden α ausgedrückt mindestens 30 °, vorzugsweise 45 ° oder mehr. Mit strichpunktierten Linien ist angedeutet, wie weit der eingerollte Abschnitt 7 sich nach innen in den wulstförmig ausgebildeten Bereich 3 erstrecken kann.

Beim Einschieben des Leitungsrohres 2 in das Preßfittingelement 1 soll der eingerollte Abschnitt 7 auf das Leitungsrohr 2 federelastisch einwirken. Dazu ist der größte Innendurchmesser D_{iS} im Scheitelbereich des eingerollten Abschnittes 7 höchstens gleich oder kleiner als der kleinste Außendurchmesser D_{aL} des eingeschobenen Leitungsrohres 2.

## Patentansprüche

1. Rohrpreßverbindung, bestehend aus einem Preßfittingelement, das mindestens einen im Querschnitt wulstartig ausgebildeten, ein Dichtmittel aufnehmenden Bereich und einen daran anschließenden, der Einschubseite abgewandten zylindrisch ausgebildeten Bereich aufweist, der einen Anschlag bildend in einen daran anschließenden zylindrisch ausgebildeten und einen geringeren Innendurchmesser aufweisenden Abschnitt übergeht und einem dünnwandigen Leitungsrohr, dessen glattendiger Endbereich nach dem Einschub in das Preßfittingelement am inneren Anschlag des Preßfittingelementes zur Anlage kommt und mittels eines das Preßfittingelement umfassenden, mindestens zwei Preßbacken aufweisenden Preßwerkzeuges nach dem Ansetzen und Schließen eine unlösbare, dichte Rohrpreßverbindung gebildet wird, wobei während des Verpressens die Preßbacken sowohl auf den Ringwulst einschließlich des darin eingelegten Dichtmittels, als auch auf den der Einschubseite abgewandten zylindrisch ausgebildeten Abschnitt des Preßfittingelementes einwirken,
dadurch gekennzeichnet,
daß unter Verzicht der Anordnung eines separaten Dichtmittels das offene Ende des Ringwulstes (3) nach innen eingerollt ist.

2. Rohrpreßverbindung nach Anspruch 1,
dadurch gekennzeichnet,
daß der größte im Scheitelbereich liegende Innendurchmesser (Dis) des eingerollten Abschnittes (7) des Ringwulstes (3) höchstens gleich oder kleiner ist als der kleinste Außendurchmesser (Dal) des eingeschobenen Leitungsrohres (2).

3. Rohrpreßverbindung nach Anspruch 1 und 2,
dadurch gekennzeichnet,
daß der eingerollte Abschnitt (7) des Ringwulstes (3) sich von der im Scheitelpunkt liegenden Vertikalen aus gesehen mindestens über 30 ° nach innen erstreckt.

4. Rohrpreßverbindung nach Anspruch 3,
dadurch gekennzeichnet,
daß die Innenerstreckung 45 ° beträgt.
